# EUROPEAN PATENT APPLICATION

(11) **EP 4 148 756 A1**
(43) Date of publication of application: **15.03.2023**
(21) Application number: 21800848.0
(22) Date of filing: 17.03.2021
(51) Int. Cl.: H01G 11/12, H01M 50/516, H01M 50/562

(54) **ELECTRICITY STORAGE DEVICE AND METHOD FOR MANUFACTURING ELECTRICITY STORAGE DEVICE**

(30) Priority: 08.05.2020 JP 2020082644
(71) Applicant: GS Yuasa International Ltd., Kisshoin, Minami-ku, Kyoto-shi, Kyoto 601-8520 (JP)
(72) Inventor: TOSHIOKA, Yoshimasa, Kyoto-shi, Kyoto 601-8520 (JP); NAGANAWA, Nobuyuki, Kyoto-shi, Kyoto 601-8520 (JP)
(74) Representative: Grünecker Patent- und Rechtsanwälte PartG mbB
(86) International application number: PCT/JP2021/010769
(87) International publication number: WO 2021/225035

(57) **Abstract**

In the embodiment, an energy storage apparatus includes: an energy storage device including a metal external terminal; and a metal bus bar that is laminated on the external terminal and welded to the external terminal. A welded portion that welds the bus bar and the external terminal is formed on the bus bar, the welded portion is extended from the bus bar to the external terminal, the external terminal includes a clad material including a first metal layer adjacent to the bus bar and a second metal layer adjacent to the first metal layer, the welded portion welds the bus bar and the first metal layer, and an end of the welded portion does not reach an interface between the first metal layer and the second metal layer.

## Description

### CROSS-REFERENCE TO RELATED APPLICATIONS

The present application claims priority to Japanese Patent Application No. 2020-082644, the contents of which are incorporated herein by reference.

### TECHNICAL FIELD

The present invention relates to an energy storage apparatus including an energy storage device having an external terminal and a bus bar, and a method for manufacturing the energy storage apparatus.

### BACKGROUND ART

Conventionally, an assembled battery including a plurality of prismatic secondary batteries including external terminals is known (for example, see Patent Document 1). The assembled battery includes a negative electrode terminal, a positive electrode terminal, the external terminal (a negative electrode external terminal or a positive electrode external terminal), and a bus bar connecting between the negative electrode external terminals or between the positive electrode external terminals. In this assembled battery, the external terminal and the bus bar are connected by laser welding. In this assembled battery, the negative electrode terminal is made of a copper material, and the bus bar is made of an aluminum material. The negative electrode external terminal includes a clad region including a copper material portion and an aluminum material portion.

By the way, in order to secure the connection strength between the external terminal and the bus bar, when a welding joining width is secured during the laser welding of the external terminal and the bus bar, a depth of penetration of the external terminal and the bus bar increases. On the other hand, when penetration by welding reaches an interface between different metal layers of the external terminal during the welding of the external terminal having the clad region and the bus bar, bonding strength at this interface (bonding strength between adjacent metal layers) decreases.

### PRIOR ART DOCUMENT

### PATENT DOCUMENT

Patent Document 1: WO 2013/065523

### SUMMARY OF THE INVENTION

### PROBLEMS TO BE SOLVED BY THE INVENTION

An object of an embodiment is to provide an energy storage apparatus including an energy storage device in which an external terminal is formed of a clad material and a bus bar is connected to the external terminal, the energy storage apparatus in which a decrease in bonding strength between metal layers constituting the clad material is prevented, and a method for manufacturing the energy storage apparatus.

### MEANS FOR SOLVING THE PROBLEMS

An energy storage apparatus of the embodiment includes: an energy storage device including a metal external terminal; and a metal bus bar that is laminated on the external terminal and welded to the external terminal. A welded portion that welds the bus bar and the external terminal is formed on the bus bar, the welded portion is extended from the bus bar to the external terminal, the external terminal includes a clad material including a first metal layer adjacent to the bus bar and a second metal layer adjacent to the first metal layer, the welded portion welds the bus bar and the first metal layer, and an end of the welded portion does not reach an interface between the first metal layer and the second metal layer.

In the energy storage apparatus, the welded portion may include a first welded portion and a second welded portion that partially overlap each other.

In the energy storage apparatus, in a section of the external terminal and the bus bar in a laminating direction of the external terminal and the bus bar, a dimension of the welded portion at a boundary position between the external terminal and the bus bar in a direction orthogonal to the laminating direction may be larger than a thickness of the first metal layer.

In the energy storage apparatus, the welded portion when viewed from the laminating direction of the external terminal and the bus bar may have an annular shape having no corner or an arc shape having no corner.

An energy storage apparatus of the embodiment includes: an energy storage device including a metal external terminal; and a bus bar that is formed of a metal containing aluminum, the aluminum being laminated on the external terminal and welded to the external terminal. A welded portion that welds the bus bar and the external terminal is formed on the bus bar, the welded portion is extended from the bus bar to the external terminal, the external terminal includes a positive electrode external terminal and a negative electrode external terminal, the positive electrode external terminal is made of a metal containing aluminum, the negative electrode external terminal includes a clad material including a first metal layer adjacent to the bus bar and a second metal layer adjacent to the first metal layer, the first metal layer is formed of a metal containing aluminum, the second metal layer is formed of a metal containing copper, the welded portion welds the bus bar and the first metal layer, and an end of the welded portion does not reach an interface between the first metal layer and the second metal layer.

A method for manufacturing an energy storage apparatus of the embodiment includes: laminating a metal bus bar on a metal external terminal of an energy storage device; applying heat to the bus bar from a side opposite to the external terminal to weld the bus bar and the external terminal; and forming a welded portion that welds the bus bar and the external terminal to each other on the bus bar. The welded portion is extended from the bus bar to the external terminal, the external terminal includes a clad material including a first metal layer adjacent to the bus bar and a second metal layer adjacent to the first metal layer, the welded portion welds the bus bar and the first metal layer, and an end of the welded portion does not reach an interface between the first metal layer and the second metal layer.

In the method for manufacturing the energy storage apparatus, the welded portion may be formed in an annular shape having no corner or an arc shape having no corner when viewed from a laminating direction of the external terminal and the bus bar.

### BRIEF DESCRIPTION OF THE DRAWINGS

Fig. 1 is a perspective view illustrating an energy storage apparatus according to an embodiment.
Fig. 2 is a perspective view illustrating an energy storage device in the energy storage apparatus.
Fig. 3 is a side view of the energy storage device.
Fig. 4 is a sectional view taken along a line IV-IV in Fig. 2.
Fig. 5 is a sectional view taken along a line V-V in Fig. 2.
Fig. 6A is a schematic plan view illustrating connection between an external terminal of the energy storage device and a bus bar.
Fig. 6B is a schematic sectional view taken along a line VI-VI in Fig. 6A.
Fig. 7A is a schematic plan view illustrating connection between an external terminal and a bus bar of an energy storage device according to a comparative example.
Fig. 7B is a schematic sectional view taken along a line VII-VII in Fig. 7A.

### MODE FOR CARRYING OUT THE INVENTION

An energy storage apparatus of the embodiment includes: an energy storage device including a metal external terminal; and a metal bus bar that is laminated on the external terminal and welded to the external terminal. A welded portion that welds the bus bar and the external terminal is formed on the bus bar, the welded portion is extended from the bus bar to the external terminal, the external terminal includes a clad material including a first metal layer adjacent to the bus bar and a second metal layer adjacent to the first metal layer, the welded portion welds the bus bar and the first metal layer, and an end of the welded portion does not reach an interface between the first metal layer and the second metal layer.

According to the above configuration, the welded portion does not reach the interface between the metal layers constituting the clad material, so that the bonding strength of each metal layer constituting the clad material can be secured.

In the energy storage apparatus, the welded portion may include a first welded portion and a second welded portion that partially overlap each other.

According to the above configuration, the bonding strength between the bus bar and the external terminal can be ensured by ensuring a wide bonding width of the welded portion.

In the energy storage apparatus, in a section of the external terminal and the bus bar in a laminating direction of the external terminal and the bus bar, a dimension in a direction orthogonal to the laminating direction at a boundary position between the external terminal and the bus bar may be larger than a thickness of the first metal layer.

According to the above configuration, because the dimension (dimension in the direction orthogonal to the laminating direction) of the welded portion is secured at the boundary position between the external terminal and the bus bar, the bonding strength between the bus bar and the external terminal can be secured, whereby the bonding strength between the bus bar and the external terminal can be secured while the bonding strength between the metal layers of the clad material is secured.

In the energy storage apparatus, the welded portion when viewed from the laminating direction of the external terminal and the bus bar may have an annular shape having no corner or an arc shape having no corner.

According to the above configuration, since the welded portion has an annular shape or an arc shape without a corner portion, even if a force is applied to the welded portion, the force is less likely to concentrate on a part of the welded portion.

An energy storage apparatus of the embodiment includes: an energy storage device including a metal external terminal; and a bus bar that is formed of a metal containing aluminum, the aluminum being laminated on the external terminal and welded to the external terminal. A welded portion that welds the bus bar and the external terminal is formed on the bus bar, the welded portion is extended from the bus bar to the external terminal, the external terminal includes a positive electrode external terminal and a negative electrode external terminal, the positive electrode external terminal is made of a metal containing aluminum, the negative electrode external terminal includes a clad material including a first metal layer adjacent to the bus bar and a second metal layer adjacent to the first metal layer, the first metal layer is formed of a metal containing aluminum, the second metal layer is formed of a metal containing copper, the welded portion welds the bus bar and the first metal layer, and an end of the welded portion does not reach an interface between the first metal layer and the second metal layer.

According to the above configuration, the welded portion does not reach the interface between the metal layers constituting the clad material, so that the bonding strength of each metal layer constituting the clad material can be secured.

A method for manufacturing an energy storage apparatus of the embodiment includes: laminating a metal bus bar on a metal external terminal of an energy storage device; applying heat to the bus bar from a side opposite to the external terminal to weld the bus bar and the external terminal; and forming a welded portion that welds the bus bar and the external terminal to each other on the bus bar. The welded portion is extended from the bus bar to the external terminal, the external terminal includes a clad material including a first metal layer adjacent to the bus bar and a second metal layer adjacent to the first metal layer, the welded portion welds the bus bar and the first metal layer, and an end of the welded portion does not reach an interface between the first metal layer and the second metal layer.

According to the above configuration, the welded portion does not reach the interface between the metal layers constituting the clad material, the energy storage apparatus in which the bonding strength of each metal layer constituting the clad material is ensured can be manufactured.

In the method for manufacturing the energy storage apparatus, the welded portion may be formed in an annular shape having no corner or an arc shape having no corner when viewed from a laminating direction of the external terminal and the bus bar.

According to the above configuration, when the welding is performed with a general welding width, an annular or arc-shaped welded portion having no corner where force is hardly concentrated on one portion can be formed.

From the above, the energy storage apparatus including the energy storage device in which the external terminal is formed of the clad material and the bus bar is connected to the external terminal, the energy storage apparatus in which the decrease in bonding strength between metal layers constituting the clad material is prevented, and a method for manufacturing the energy storage apparatus can be provided.

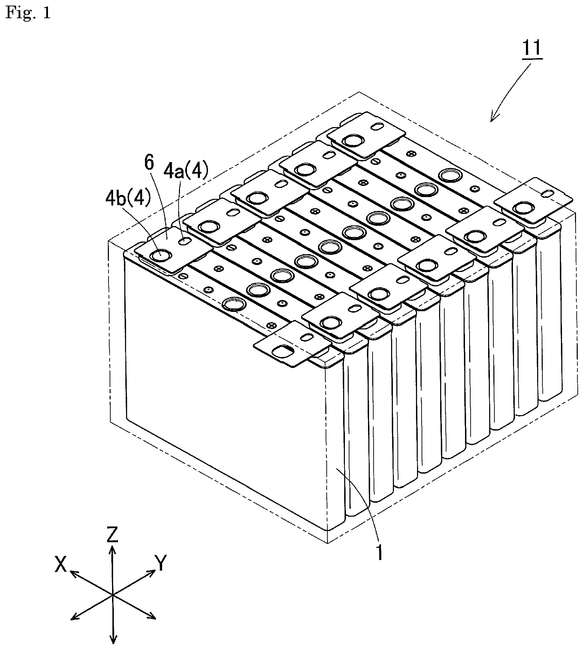

Hereinafter, an embodiment of the present invention will be described with reference to Figs. 1 to 7B. In the embodiment, a chargeable and dischargeable secondary battery will be described as an example of the energy storage device. Names of the constituent members (constituent elements) of the embodiment are those in the embodiment, and are sometimes different from the names of the constituent members (constituent elements) in the background art.

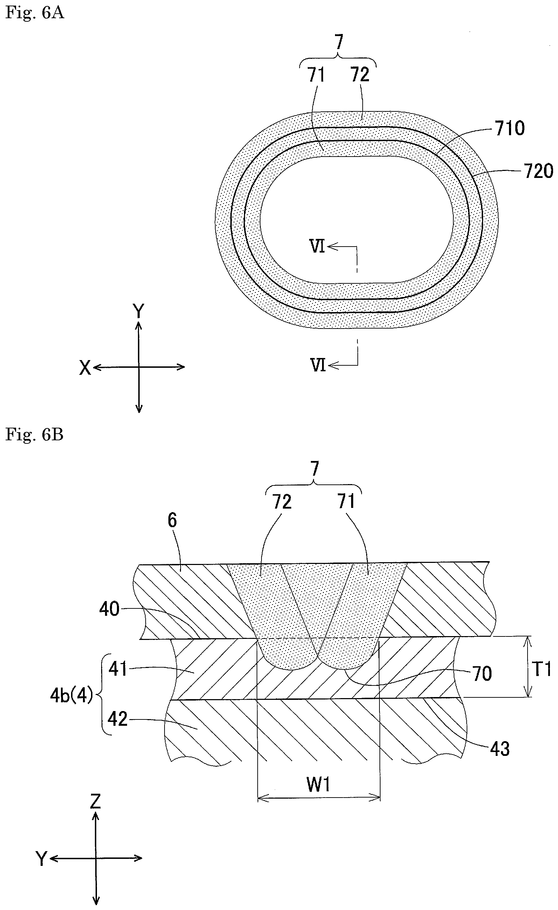

As illustrated in Fig. 1, an energy storage apparatus 11 includes an energy storage device 1 including a metal external terminal 4 and a metal bus bar 6 that is laminated on the external terminal 4 and welded to the external terminal 4. As illustrated in Fig. 6B, in the bus bar 6 of the energy storage apparatus 11, a welded portion 7 that welds the external terminal 4 and the bus bar 6 is formed at a joining position between the external terminal 4 and the bus bar 6. The energy storage apparatus 11 of the embodiment includes a plurality of energy storage devices 1 (see Fig. 1).

The plurality of energy storage devices 1 are arranged in a predetermined direction (first direction). For example, the first direction is a direction orthogonal to a laminating direction of the external terminal 4 and the bus bar 6. Each of the plurality of energy storage devices 1 is a primary battery, a secondary battery, a capacitor, or the like. The energy storage device 1 of the embodiment is a nonaqueous electrolyte secondary battery that can be charged and discharged. More specifically, the energy storage device 1 is a lithium ion secondary battery utilizing electron transfer caused by transfer of the lithium ion. The energy storage device 1 is what is called a prismatic lithium ion secondary battery.

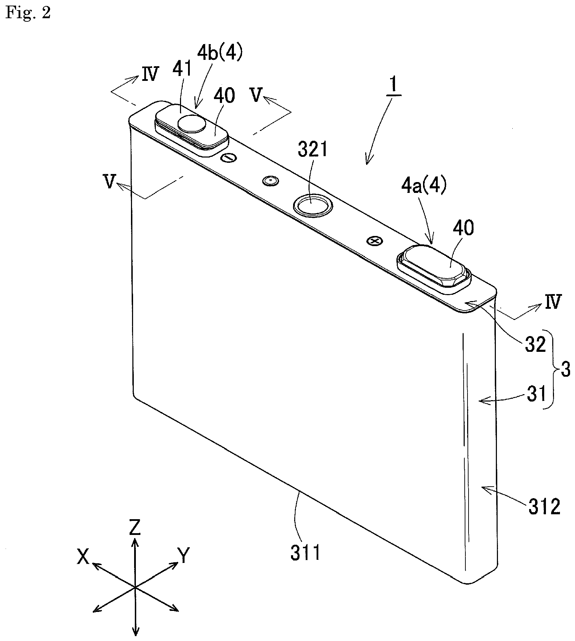

As illustrated in Figs. 2 to 5, the energy storage device 1 includes an electrode assembly 2 including a positive electrode and a negative electrode, a case 3 accommodating the electrode assembly 2, and the external terminal 4 that is disposed outside the case 3 and electrically connected to the electrode assembly 2. In addition to the electrode assembly 2, the case 3 and the external terminal 4, the energy storage device 1 includes a current collector 5 that makes the electrode assembly 2 and the external terminal 4 conductive with each other.

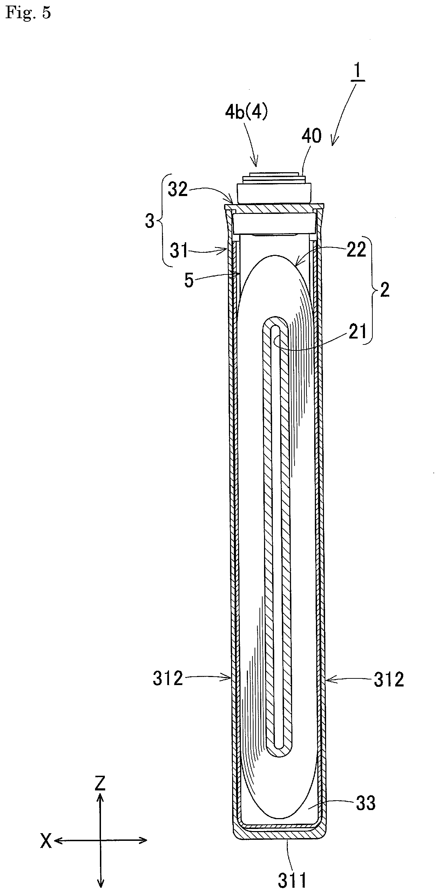

The electrode assembly 2 includes a winding core 21 and a layered product 22 in which a positive electrode and a negative electrode are insulated from each other and laminated, the layered product 22 being wound around a winding core 21 (see Fig. 5). When the lithium ion moves between the positive electrode and the negative electrode in the electrode assembly 2, the energy storage device 1 is charged and discharged.

For example, the positive electrode includes a strip-shaped metal foil and a positive active material layer formed on the metal foil. For example, the negative electrode includes a strip-shaped metal foil and a negative active material layer formed on the metal foil.

In the electrode assembly 2 of the embodiment, the positive electrode and the negative electrode are wound while being insulated from each other by a separator. That is, in the electrode assembly 2 of the embodiment, the layered product of the positive electrode, the negative electrode, and the separator is wound. The separator is a member having an insulating property. The separator is disposed between the positive electrode and the negative electrode. Thus, in the electrode assembly 2 (particularly, the layered product), the positive electrode and the negative electrode are insulated from each other. The separator holds the electrolyte solution in the case 3. Thus, during charge-discharge of the energy storage device 1, the lithium ion moves between the positive electrode and the negative electrode that are alternately layered with the separator interposed therebetween.

The case 3 includes a case body 31 including an opening, and a lid plate 32 that closes the opening of the case body 31. The case 3 accommodates the electrolyte solution in an internal space 33 together with the electrode assembly 2, the current collector 5, and the like. The case 3 is made of metal having resistance to the electrolyte solution. For example, the case 3 of the embodiment is formed of aluminum or a metal material containing aluminum such as an aluminum alloy. The case 3 may be formed of a metal material such as stainless steel and nickel, a composite material obtained by bonding resin such as nylon to aluminum, or the like.

The electrolyte solution is a non-aqueous solution electrolytic solution. The electrolyte solution is obtained by dissolving an electrolyte salt in an organic solvent. Examples of the organic solvent include cyclic carbonate esters such as propylene carbonate and ethylene carbonate, and chain carbonates such as dimethyl carbonate, diethyl carbonate, and ethyl methyl carbonate. Examples of the electrolyte salt include LiClO₄, LiBF₄, and LiPFs.

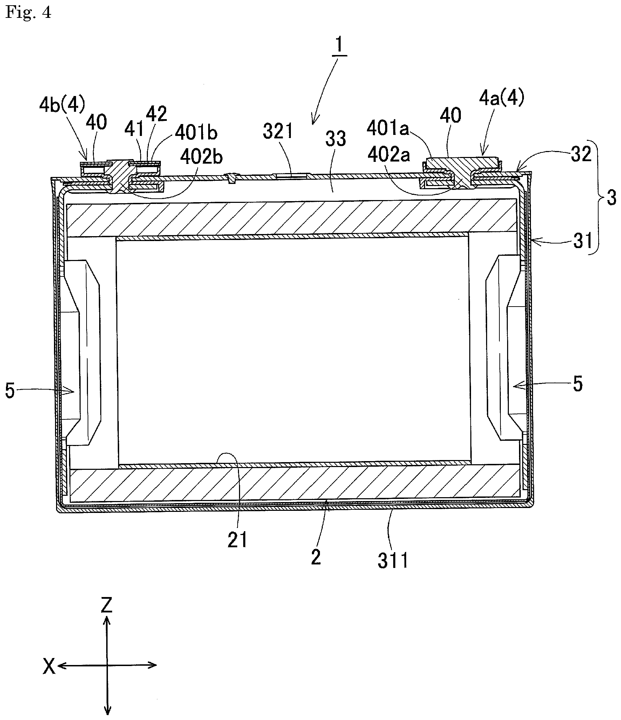

The case 3 is formed by overlapping and joining an opening peripheral edge of the case body 31 and a peripheral edge of the lid plate 32 (see Fig. 4). The case 3 includes an internal space 33 defined by the case body 31 and the lid plate 32. In the embodiment, the opening peripheral edge of the case body 31 and the peripheral edge of the lid plate 32 are joined by welding.

The case body 31 includes a closing portion 311 that has a plate shape and includes an inner surface facing the inside of the case 3 and an outer surface facing the outside of the case 3, and a cylindrical body portion 312 that is connected to a peripheral edge of the closing portion 311, extends to the inner surface side of the closing portion 311, and surrounds the inner surface of the closing portion 311 (see Fig. 2).

The closing portion 311 is a member positioned at a lower end of the case body 31 (that is, a bottom wall of the case body 31 is formed when the opening looks upward) when the case body 31 is disposed such that the opening looks upward. The closing portion 311 has a rectangular shape as viewed in a normal direction of the closing portion 311. The four corners of the closing portion 311 have an arc shape.

Hereinafter, as illustrated in Fig. 2, a long side direction of the closing portion 311 is defined as an X-axis direction, a short side direction of the closing portion 311 is defined as a Y-axis direction, and the normal direction of the closing portion 311 is defined as a Z-axis direction.

The lid plate 32 is a plate-like member that closes the opening of the case body 31. Specifically, the lid plate 32 abuts on the case body 31 so as to close the opening of the case body 31. More specifically, the peripheral edge of the lid plate 32 overlaps with the opening peripheral edge of the case body 31 such that the lid plate 32 closes the opening. A boundary portion between the lid plate 32 and the case body 31 laminated in this manner is welded. Thus, the case 3 is configured.

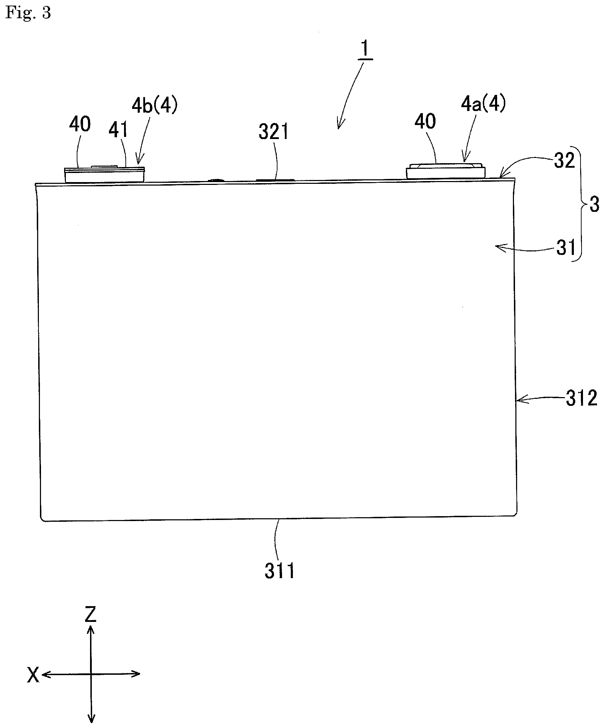

The lid plate 32 includes a gas release valve 321 capable of discharging gas in the case 3 to the outside (see Fig. 3). The gas release valve 321 discharges the gas from the inside of the case 3 to the outside when internal pressure of the case 3 increases to a predetermined pressure.

The external terminal 4 is a member that is electrically connected to an external terminal of another energy storage device, an external device, or the like. The external terminal 4 of the embodiment has an outer surface 40 that is a surface to which the bus bar or the like can be welded. The outer surface 40 of the embodiment is a flat surface. The external terminal 4 has a plate shape expanding along the lid plate 32. Particularly, a flange of the external terminal 4 has a rectangular plate shape as viewed in the Z-axis direction.

The external terminal 4 has a flange that extends along the case 3 outside the case 3, and a shaft that extends from the flange, penetrates the case 3, and is electrically connected to the electrode assembly 2 (see Fig. 4). Furthermore, the external terminal 4 includes an external terminal (positive electrode external terminal) 4a connected to the positive electrode and an external terminal (negative electrode external terminal) 4b connected to the negative electrode.

In the external terminal 4a, a flange 401a and a shaft 402a are integrated. The external terminal 4a is formed of aluminum or a metal material containing aluminum such as an aluminum alloy.

In the external terminal 4b, a flange 401b and a shaft 402b are separate bodies (separate members). The flange 401b and the shaft 402b are connected by swaging the shaft 402b.

The external terminal 4b has a clad material including a plurality of (two layers in the example of the embodiment) metal layers laminated in the laminating direction (Z-axis direction) of the bus bar 6 and the external terminal 4. Specifically, in the external terminal 4b, the flange 401b is made of a clad material. The metal layers adjacent to each other in the plurality of metal layers are made of different kinds of metals.

For example, as illustrated in Fig. 6B, the plurality of metal layers included in the flange 401b (external terminal 4b) include a first metal layer 41 located closest to the bus bar 6 in the Z-axis direction (that is, adjacent to the bus bar 6), and a second metal layer 42 adjacent to the first metal layer 41. The flange 401b of the embodiment is configured of the first metal layer 41 and the second metal layer 42. For example, the thickness of the first metal layer 41 of the embodiment ranges from 0.2 mm to 1.0 mm, and the thickness of the second metal layer 42 ranges from 0.2 mm to 3.0 mm. The thickness of the first metal layer 41 and the thickness of the second metal layer 42 are not limited to these ranges.

For example, the first metal layer 41 is formed of aluminum or a metal material containing aluminum such as an aluminum alloy. For example, the second metal layer 42 is formed of a metal material containing copper such as copper or a copper alloy.

The current collector 5 is disposed in the case 3 and directly or indirectly connected to the electrode assembly 2 in a conductive manner (see Figs. 4 and 5). The current collector 5 is formed of a member having conductivity.

The bus bar 6 connects the different energy storage devices 1 to each other or connects the energy storage device 1 to an external input and output terminal or the like in a conductive manner (see Fig. 1). The bus bar 6 of the embodiment is overlapped on the outer surface 40 of the external terminal 4 and welded to the external terminal 4 (see Fig. 6B). In addition, the bus bar 6 of the embodiment is made of the same material as the external terminal 4a. Furthermore, the bus bar 6 of the embodiment is made of the same material as the first metal layer 41 of the external terminal 4b. Specifically, the bus bar 6 is formed of aluminum or a metal material containing aluminum such as an aluminum alloy.

The welded portion 7 is a member formed by welding the external terminal 4b (particularly, the flange 401b) and the bus bar 6 (see Figs. 6A and 6B). The welded portion 7 is extended from the bus bar 6 to the external terminal 4b, namely, formed between the bus bar 6 and the external terminal 4b. In other words, the welded portion 7 is formed continuously from the bus bar 6 to the external terminal 4b. The welded portion 7 of the embodiment is formed by laser welding between the external terminal 4b and the bus bar 6. The welded portion 7 of the embodiment includes welding tracks 710, 720 that are a mark of a laser irradiation position (specifically, a mark due to a center of the laser irradiation position). The width of the laser beam with which the bus bar 6 is irradiated in the laser welding of the embodiment is less than or equal to 1.0 mm.

The method for manufacturing the energy storage apparatus 11 includes a process of forming the welded portion 7 when the external terminal 4b and the bus bar 6 are welded to each other. Specifically, the method for manufacturing the energy storage apparatus 11 includes: laminating the metal bus bar 6 on the metal external terminal 4b of the energy storage device 1; applying heat to the bus bar 6 from the side opposite to the external terminal 4b to weld the bus bar 6 and the external terminal 4b to each other; and forming the welded portion 7 where the bus bar 6 and the external terminal 4b are welded to each other at the welding position between the external terminal 4b and the bus bar 6, namely, forming the welded portion 7 between the external terminal 4b and the bus bar 6. In other words, the welded portion 7 is formed continuously from the bus bar 6 to the external terminal 4b.

In the Z-axis direction, an end 70 of the welded portion 7 does not reach an interface 43 between the first metal layer 41 and the second metal layer 42. Specifically, the end 70 of the welded portion 7 exists in the first metal layer 41. More specifically, the end 70 of the welded portion 7 is located closer onto the side of the bus bar 6 than the interface 43 between the first metal layer 41 and the second metal layer 42 (see Fig. 6B). That is, in the Z-axis direction, the end 70 is located in front of the interface 43 between the first metal layer 41 and the second metal layer 42.

The end 70 of the welded portion 7 is an end on the side of the external terminal 4b out of both ends of the welded portion 7 in the Z-axis direction. That is, the end 70 of the welded portion 7 becomes a lower end of the welded portion 7 when the case body 31 is disposed such that the opening looks upward (that is, when the bus bar 6 is disposed above the external terminal 4b).

The welded portion 7 of the embodiment includes a first welded portion 71 and a second welded portion 72 partially overlapping each other. Specifically, the first welded portion 71 and the second welded portion 72 overlap each other at least at a boundary position between the external terminal 4b and the bus bar 6 (the outer surface 40 of the external terminal 4b). The first welded portion 71 includes a first welding track 710, and the second welded portion 72 includes a second welding track 720 (see Fig. 6A).

In the dimension (width W1) of the welded portion 7 in the direction along the boundary at the boundary position (particularly, the outer surface 40 of the flange 401b of the external terminal 4b) between the external terminal 4b and the bus bar 6 in the Z-axis direction, namely, in the section (see Fig. 6B) in the direction crossing the welding tracks 710 and 720, the dimension W1 of the welded portion 7 in the direction orthogonal to the Z-axis direction at the boundary position between the external terminal 4b and the bus bar 6 is larger than the thickness T1 of the first metal layer 41 (see Fig. 6B). That is, the width W1 of the welded portion 7 at this boundary position is larger than the thickness T1 of the first metal layer 41.

Furthermore, the shape of the welded portion 7 viewed from the Z-axis direction is an annular shape without a corner (for example, an elliptic shape or a circular shape). That is, the welded portion 7 is formed in an annular shape having no corner when viewed from the Z-axis direction. In the welded portion 7 of the embodiment, the shape of the first welding track 710 and the shape of the second welding track 720 are both annular without corner (in the example of Fig. 6A, whet is called a racetrack type). In the welded portion 7 of the embodiment, the welding track is formed in a plurality of concentric circles (for example, a double circle shape).

The first welding track 710 is separated from the second welding track 720. Specifically, the first welding track 710 and the second welding track 720 are separated from each other in the range where the first welded portion 71 and the second welded portion 72 overlap each other at the boundary position between the bus bar 6 and the external terminal 4b. The first welding track 710 is disposed inside the second welding track 720.

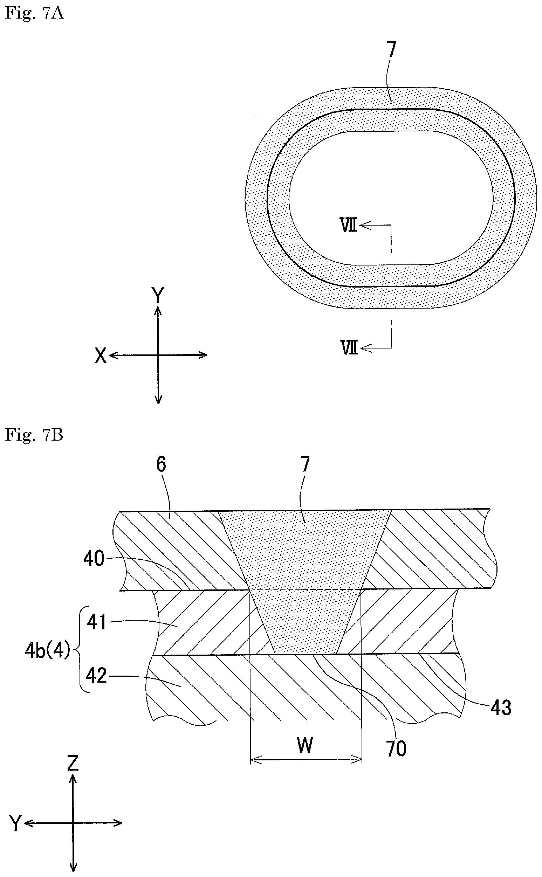

In the conventional energy storage apparatus, when the external terminal 4b and the bus bar 6 are welded by the laser welding such that the welding track is formed around the bus bar 6, as illustrated in Figs. 7A and 7B, the depth of the penetration between the external terminal 4b and the bus bar 6 is increased in order to increase the width of the welded portion 7 at the boundary position between the external terminal 4b and the bus bar 6 (the upper surface 40 of the external terminal 4b) for the purpose of securing the bonding strength between the external terminal 4b and the bus bar 6. Consequently, in the conventional energy storage apparatus, the end 70 of the welded portion 7 reaches the interface 43 between the first metal layer 41 and the second metal layer 42 that constitute the clad material, and sometimes the bonding strength between the metal layers 41 and 42 is not secured.

On the other hand, in the energy storage apparatus 11 of the embodiment, because the end 70 of the welded portion 7 is positioned in front of the interface 43 between the first metal layer 41 and the second metal layer 42 (see Fig. 6B), namely, because the welded portion 7 does not reach the interface 43 between the first metal layer 41 and the second metal layer 42 that constitute the clad material of the external terminal 4b, the bonding strength between the metal layers 41 and 42 that constitute the clad material is secured. The details are as follows.

In the case where the laser beam having a small spot diameter (less than or equal to 1.0 mm) is used for welding the bus bar 6 and the external terminal 4b, when the width of the welded portion 7 is small, the welding strength between the external terminal 4b and the bus bar 6 cannot be secured. On the other hand, when the penetration depth in the welded portion 7 is increased in order to secure the welding strength, the end 70 of the welded portion 7 reaches the interface between the first metal layer 41 and the second metal layer 42 of the external terminal (clad material) 4b to generate an alloy of copper and aluminum, so that the strength of the external terminal 4b (particularly, the flange 401b formed of the clad material) decreases. Therefore, like the method for manufacturing the energy storage apparatus 11 of the embodiment, the end 70 of the welded portion 7 does not reach the interface 43 between the first metal layer 41 and the second metal layer 42 of the clad material (external terminal 4b) as a method for welding the external terminal 4b (flange 401b) and the bus bar 6 with the laser beam having the small spot diameter so as not to lower the interface strength of the clad material. At this point, the spot diameter of the laser welding in the embodiment is the width of the laser beam focused by the laser beam being narrowed at the focal position. That is, the width of the laser that focuses on the upper surface of the bus bar 6 is the spot diameter.

For example, specifically, like the energy storage apparatus 11 of the embodiment, the first welded portion 71 and the second welded portion 72 partially overlap with each other to secure the wide bonding width of the welded portion 7, so that the bonding strength between the bus bar 6 and the external terminal 4b can be secured. That is, as compared with the case where the first welded portion 71 and the second welded portion 72 are welded while being separated from each other (in the state where the first welded portion 71 and the second welded portion 72 do not overlap each other), when the first welded portion 71 and the second welded portion 72 partially overlap each other like the energy storage apparatus 11 of the embodiment, an area (the size of the width W1, see Fig. 6(b)) of the welded portion 7 is secured, and the sufficient connection strength can be obtained at the connection (welding) member between the bus bar 6 and the external terminal 4b.

In the energy storage apparatus 11 of the embodiment, the width W1 at the boundary position between the external terminal 4b of the welded portion 7 and the bus bar 6 is larger than the thickness T1 of the first metal layer 41, so that the dimension of the welded portion 7 is sufficiently secured at the boundary position. Consequently, the bonding strength between the bus bar 6 and the external terminal 4b can be secured. Thus, the bonding strength between the bus bar 6 and the external terminal 4b can be secured while the bonding strength between the metal layers 41 and 42 constituting the clad material is secured.

Like the energy storage apparatus 11 of this embodiment, when the clad material including the first metal layer 41 made of aluminum and the second metal layer 42 made of the copper is made to constitute the external terminal 4b (particularly, the flange 401b), the electric resistance of the external terminal 4b can be restrained by making the width W1 of the welded portion 7 at the boundary position between the bus bar 6 and the external terminal 4b larger than the thickness T1 of the first metal layer 41. That is, when the width W1 at the boundary position of the welded portion 7 is made larger than the thickness T1 of the first metal layer 41 while the end 70 of the welded portion 7 does not reach the interface 43 between the first metal layer 41 and the second metal layer 42, the layer of aluminum (first metal layer 41) having electrical conductivity higher than that of copper is thinned while the welding strength between the external terminal 4b and the bus bar 6 is sufficiently secured, so that the electric resistance of the entire external terminal 4b can be restrained.

In the energy storage apparatus 11 of the embodiment, the bus bar 6 and the external terminal 4b are cut at the position where the bus bar 6 and the external terminal 4b cross the welded portion 7 (welding tracks 710, 720), and the section (the section along the laminating direction) of the bus bar 6 and the external terminal 4b is etched, so that the penetration depth (the position of the end 70 in the Z-axis direction), the shape, the width W1, and the like of the welded portion 7 can be checked because a corrosion speed is different between the welded portion 7 and other portions.

Furthermore, in the energy storage apparatus 11 of the embodiment, because the welded portion 7 has the annular shape without the corner, force is hardly concentrated on a portion of the welded portion 7 even when the force is applied to the welded portion 7. In other words, the welded portion 7 has the annular shape without the corner, so that stress concentration in the welded portion 7 can be restrained.

In the method for manufacturing the energy storage apparatus 11 described above, the welded portion 7 does not reach the interface between the metal layers 41, 42 that constitute the clad material of the external terminal 4b, so that the energy storage apparatus 11 in which the bonding strength between the metal layers 41, 42 constituting the clad material is secured can be manufactured.

In the method for manufacturing the energy storage apparatus 11 of the embodiment, when the welding is performed with a general welding width, the annular welded portion 7 having no corner where the force is hardly concentrated on one portion can be formed.

In the energy storage apparatus 11 of the embodiment, the energy storage devices 1 are arranged in the direction orthogonal to the laminating direction of the external terminals 4b and the bus bars 6. Thus, the laminated portion between the external terminal 4b and the bus bar 6 in each energy storage device 1 is not hidden by another energy storage device, so that the welding between the external terminal 4b and the bus bar 6 can be easily performed. In addition, the laminated portion of the external terminal 4b and the bus bar 6 is not hidden by another energy storage device, so that alignment of the bus bar 6 and the external terminal 4b before the welding is easy to perform.

It is needless to say that the energy storage apparatus and the method for manufacturing the energy storage apparatus of the present invention are not limited to the above-mentioned embodiment, and various modifications can be made without departing from the gist of the present invention. For example, the configuration of another embodiment can be added to the configuration of one embodiment, and a part of the configuration of one embodiment can be replaced with the configuration of another embodiment. Furthermore, a part of the configuration of an embodiment can be deleted.

In the embodiment, the welded portion 7 viewed from the Z-axis direction has the shape without the corner, but may be a shape with the corner (for example, a polygonal shape having the corner, a linear shape, and a polygonal line shape).

The welded portion 7 viewed from the Z-axis direction preferably has the shape without the corner, and may be an arc shape without the corner. Even in this case, because the welded portion 7 has the shape without the corner, the force does not concentrate on a part of the welded portion 7 even when the force is applied to the welded portion 7. When the welded portion 7 has the arc shape, the arc shape having a length greater than or equal to a semicircle is more preferable from the viewpoint of ensuring the bonding strength between the external terminal 4b constituting the clad material and the bus bar 6.

Furthermore, the shape of the welded portion 7 viewed from the Z-axis direction may be a spiral shape without a corner or the like. The shape of the welded portion 7 as viewed from the Z-axis direction may be a curved shape or the like.

Although the welded portion 7 includes the first welding track 710 and the second welding track 720 as two welding tracks, the welded portion 7 may include one welding track or at least three welding tracks. When the welded portion 7 includes the plurality of welding tracks, the plurality of welding tracks may be separated from each other or partially overlap each other. When the plurality of welding tracks overlap each other in the welded portion 7, the output of the welding may be limited (adjusted) such that the end 70 of the welded portion 7 does not reach the interface 43 between the metal layers 41, 42.

The dimension (dimension of the width W1) of the welded portion 7 at the boundary position between the external terminal 4b and the bus bar 6 in the Z-axis direction (the outer surface 40 of the external terminal 4) in the direction along this boundary is larger than the thickness T1 of the first metal layer 41, but may be the same as the thickness T1 of the first metal layer 41 or be smaller than the thickness T1 of the first metal layer 41.

In the embodiment, the flange (clad material) 401b of the external terminal 4b is constituted of two metal layers, but may be constituted of a plurality of metal layers of at least three layers. Also in this case, the end 70 of the welded portion 7 is positioned closer to the bus bar 6 than the interface between the first metal layer 41 adjacent to the bus bar 6 and the second metal layer 42 adjacent to the first metal layer 41 in the flange (clad material) 401b of the external terminal 4b, so that the configuration in which the welded portion 7 does not reach the interface 43 between the metal layers 41, 42 constituting the clad material can be implemented.

Furthermore, in the embodiment, the energy storage apparatus 11 includes the plurality of energy storage devices 1. However, the energy storage apparatus 11 may include one energy storage device 1.

In the embodiment, the case where the energy storage device is used as the nonaqueous electrolyte secondary battery (for example, the lithium ion secondary battery) that can be charged and discharged has been described. However, the type and the size (capacity) of the energy storage device are arbitrary. In the embodiment, the lithium ion secondary battery has been described as an example of the energy storage device, but the present invention is not limited thereto. For example, the present invention is also applicable to various secondary batteries, primary batteries, and energy storage devices of capacitors such as an electric double layer capacitor.

In order to express the present invention, the present invention has been appropriately and sufficiently described above through the embodiment with reference to the drawings, but it should be recognized that a person skilled in the art can easily modify and/or improve the embodiment. Accordingly, as long as the modification or improvement implemented by those skilled in the art are not at a level departing from the scope of the claims described in the claims, the modification or improvement is interpreted to be included in the scope of the claims.

### DESCRIPTION OF REFERENCE SIGNS

1: energy storage device
2: electrode assembly
3: case
4, 4a, 4b: external terminal
5: current collector
6: bus bar
7: welded portion
11: energy storage apparatus
21: winding core
22: layered product
31: case body
32: lid plate
33: internal space
40: outer surface (upper surface)
41: first metal layer (metal layer)
42: second metal layer (metal layer)
43: interface
70: end
71: first welded portion
72: second welded portion
311: closing portion
312: body portion
321: gas release valve
401a, 401b: flange
402a, 402b: shaft
710: first welding track
720: second welding track
W1: width

## Claims

1. An energy storage apparatus comprising:
an energy storage device including a metal external terminal; and
a metal bus bar that is laminated on the external terminal and welded to the external terminal,
wherein a welded portion that welds the bus bar and the external terminal is formed on the bus bar,
the welded portion is extended from the bus bar to the external terminal,
the external terminal includes a clad material including a first metal layer adjacent to the bus bar and a second metal layer adjacent to the first metal layer,
the welded portion welds the bus bar and the first metal layer, and
an end of the welded portion does not reach an interface between the first metal layer and the second metal layer.

2. The energy storage apparatus according to claim 1, wherein the welded portion includes a first welded portion and a second welded portion that partially overlap each other.

3. The energy storage apparatus according to claim 1 or 2, wherein in a section of the external terminal and the bus bar in a laminating direction of the external terminal and the bus bar, a dimension of the welded portion at a boundary position between the external terminal and the bus bar in a direction orthogonal to the laminating direction is larger than a thickness of the first metal layer.

4. The energy storage apparatus according to any one of claims 1 to 3, wherein the welded portion when viewed from the laminating direction of the external terminal and the bus bar has an annular shape having no corner or an arc shape having no corner.

5. An energy storage apparatus comprising:
an energy storage device including a metal external terminal; and
a bus bar that is formed of a metal containing aluminum, the aluminum being laminated on the external terminal and welded to the external terminal,
wherein a welded portion that welds the bus bar and the external terminal is formed on the bus bar,
the welded portion is extended from the bus bar to the external terminal,
the external terminal includes a positive electrode external terminal and a negative electrode external terminal,
the positive electrode external terminal is made of a metal containing aluminum,
the negative electrode external terminal includes a clad material including a first metal layer adjacent to the bus bar and a second metal layer adjacent to the first metal layer,
the first metal layer is formed of a metal containing aluminum,
the second metal layer is formed of a metal containing copper,
the welded portion welds the bus bar and the first metal layer, and
an end of the welded portion does not reach an interface between the first metal layer and the second metal layer.

6. A method for manufacturing an energy storage apparatus, comprising:
laminating a metal bus bar on a metal external terminal of an energy storage device;
applying heat to the bus bar from a side opposite to the external terminal to weld the bus bar and the external terminal; and
forming a welded portion that welds the bus bar and the external terminal to each other on the bus bar,
wherein the welded portion is extended from the bus bar to the external terminal,
the external terminal includes a clad material including a first metal layer adjacent to the bus bar and a second metal layer adjacent to the first metal layer,
the welded portion welds the bus bar and the first metal layer, and
an end of the welded portion does not reach an interface between the first metal layer and the second metal layer.

7. The method for manufacturing the energy storage apparatus according to claim 6, wherein the welded portion is formed in an annular shape having no corner or an arc shape having no corner when viewed from a laminating direction of the external terminal and the bus bar.
